# EUROPEAN PATENT APPLICATION

(11) **EP 1 187 484 A2**
(43) Date of publication of application: **13.03.2002**
(21) Application number: 01307297.0
(22) Date of filing: 28.08.2001
(51) Int. Cl.: H04N 7/16

(54) **Improvements to a television system**

(30) Priority: 30.08.2000 GB 0021129
(71) Applicant: Pace Micro Technology PLC, Shipley, West Yorkshire BD18 3LF (GB)
(72) Inventor: Forrest, Simon, Ely, Cambridgeshire CB7 4FE (GB)
(74) Representative: Wood, Graham

(57) **Abstract**

A television system and method of generating a display for a television system is provided. The television system includes a broadcast data receiver (BDR) (4) connected to or integrally formed with a display screen (6). The BDR (4) receives digital data from a broadcaster at a remote location and decodes and processes the data to provide video, audio and/or auxiliary data relating to a number of channels and/or programmes. In addition, the BDR is provided with a hard disk drive (10) connected to or integrally formed therewith for the selective processing and storage of the received data. Transmission of data for channels on which new and changing data is broadcast for a limited period of time, in any given time period, is identified by the broadcast data receiver. In those time periods outside the given time period, the BDR generates a display on the display screen (6) for the channels from data held in the hard disk drive (10). The generated display can be a fixed/static display and/or a repeated video display.

## Description

The invention to which this application relates is to an improvement to a television system and, in particular, to a television system which incorporates a large number of channels which are available for selection for viewing by a user, and a method of generating a display for a television system.

With the advent of digital data transmission systems in which television programmes can be generated, the data is transmitted via any of satellite, cable and/or terrestrial data broadcast systems. Regardless of which system is used, there is always a need to optimise the use of available data capacity for translation of data. The ability of digital data to be encoded into reduced size and then decoded at reception makes the same particularly attractive and allows the increased number of channels which are now available for selection for viewing in comparison to say 10 years ago.

A further development is to provide in a broadcast data receiver or in connection therewith, storage means such as for example a random access memory in the form of a hard disc, similar to that which is used in personal computers but of increased capacity. The broadcast data receiver is provided with means to allow the selective storage of received data into the hard disc and also allows for the selective retrieval of portions of said data for processing at a later time and for the generation of video and audio therefrom by a user in their premises via the television set. The ability to store data rather than simply process and display the same at the time of reception, represents a considerable step forward and the aim of the present invention is to provide a use of this storage capacity to, in turn, make available bandwidth capacity to the broadcaster of the data to allow further and alternative data to be broadcast for reception by the broadcaster data receivers.

As such, it is an aim of the present invention to provide a television system which allows the generation of a display whilst using reduced amounts of bandwidth and a method of performing the same.

In a first aspect of the invention there is provided a television system, said television system including a broadcast data receiver (BDR) connected to or integrally formed with a display screen, said BDR receiving digital data from a broadcaster at a remote location and decoding and processing said data to provide video, audio and/or auxiliary data relating to a number of channels and/or programmes, said BDR having storage means for the selective processing and storage of said received data and characterised in that, transmission of data for one or more channels on which new and changing data is broadcast for a limited period of time in any given time period, is identified by the broadcast data receiver and, in those time periods outside the given time period, a video and/or audio display is generated on the display screen and/or via speakers for said one or more channels from data held in said storage means.

Preferably outside the given time periods a repeat signal is transmitted from the broadcaster at spaced intervals and the BDR generates a display from data held in the storage means between the spaced intervals.

In one embodiment the storage means is a hard disk drive.

By allowing the BDR to refere to data held in storage means for generating a fixed display or a repeated video display, there is no longer a need for the video for the fixed display or repeated video display, to be continuously transmitted to the receiver. This in turn means that bandwidth capacity is released and can be used for the transmission of other data as required by the broadcaster.

In one embodiment, if a fixed screen display is generated in the time period in which no television programmes are transmitted on a given channel, then the fixed screen display data may only be transmitted once, at the end of the transmission of television programmes on that channel, said data stored in the storage means in the broadcast data receiver and then referred to thereafter until the channel again commences showing television programmes. Alternatively the fixed screen display can be generated from data transmitted to and stored in the BDR at pre-determined time intervals.

In an alternative embodiment, and particularly if a repeated video display is shown rather than a fixed display, the data for the repeated video display may be sent every ½-hour or hour and stored in the storage means and can be referred to until the next set of data is transmitted. The broadcaster can update the repeated video display if required.

In addition to allowing bandwidth capacity to be freed for the broadcaster, the channel operator or provider can still be satisfied in that the fixed display or repeated video display is still being generated and hence, to the user of the apparatus, there is still the appearance that the particular channel is available.

According to a second aspect of the present invention there is provided a broadcast data receiver (BDR), said BDR connected to or integrally formed with a display screen, said BDR receiving digital data from a broadcaster at a remote location and decoding and processing said data to provide video, audio and/or auxiliary data relating to a number of channels and/or programmes, said BDR having storage means for the selective processing and storage of said received data and characterised in that, transmission of data for one or more channels on which new and changing data is broadcast for a limited period of time in any given time period, is identified by the broadcast data receiver and, in those time periods outside the given time period, a display is generated on the display screen for said one or more channels from data held in said storage means.

According to a further aspect of the present invention there is provided a method of generating a display for a television system, said television system including a broadcast data receiver (BDR) connected to or integrally formed with a display screen, said BDR receiving digital data from a broadcaster at a remote location and decoding and processing said data to provide video, audio and/or auxiliary data relating to a number of channels and/or programmes, and characterised in that said method includes the steps of said BDR identifying data relating to one or more channels on which new and changing data is broadcast for a limited period of time only in any given time period, said BDR identifying time periods outside said given time period, and in those outside time periods, said BDR retrieving data stored in storage means connected to or forming part of said BDR and generating a video and/or audio display on said display screen and/or via speakers for said one or more channels.

A specific embodiment of the invention is now described with reference to the accompanying drawings, wherein:-
Figure 1 illustrates, in schematic fashion, how data for video and/or audio can be obtained by a broadcast data receiver and processed in accordance with the present invention; and
Figure 2 is an example of a fixed screen display according to an embodiment of the present invention.

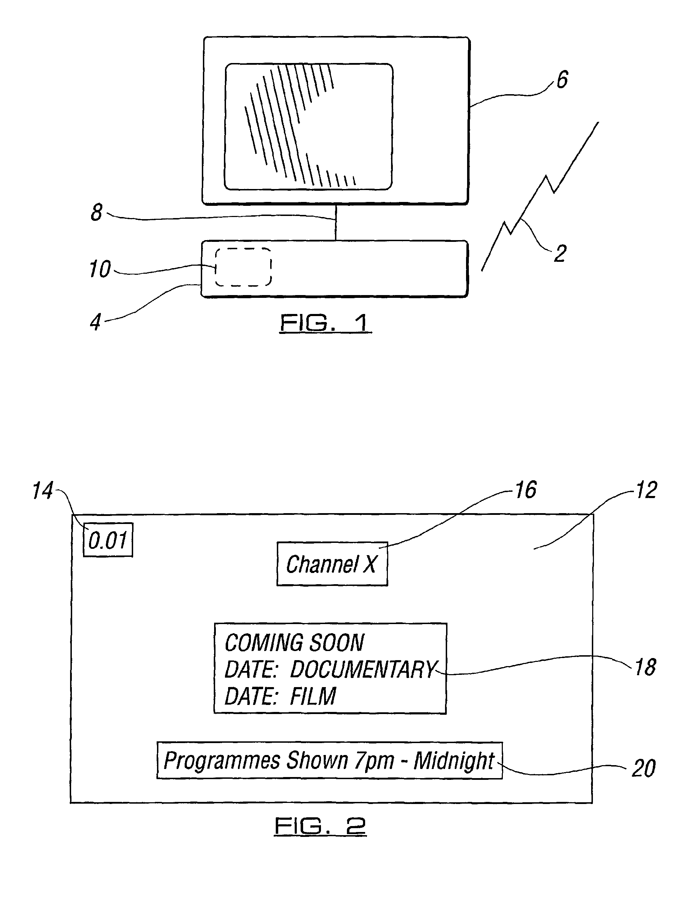

The invention will now be described with reference to two forms of channel, the data for which is provided by a broadcaster from a remote location via any of satellite, cable or terrestrial transmission systems, to a number of broadcast data receivers, one of which 4 is shown in Figure 1.

A first type of channel is that which continuously displays television programmes and is therefore showing television programmes available for selection by the user of the broadcast data receiver 24 hours a day, 7 days a week. The provision of this service is not affected by the current invention in that data is transmitted to the broadcast data receiver 4, via a transmission system 2, processed and video and audio data generated by the broadcast data receiver is sent to, in this case, a television set 6, via connection 8. It should be noted that in this case the broadcast receiver is shown as being separate to the television set but could equally be incorporated within the television set itself.

The second type of channel and the type which is affected by this invention, is a channel which is active for a certain period of time in any given time period, such as for example a television channel which shows television programmes between the times of 7pm and midnight but for the rest of the time in any 24-hour period is inactive. For the duration of the period of showing television programmes then the process as described with reference to the first type of channel is equally applicable.

However, when the end of that period is reached, say for example, midnight, then in accordance with the invention, data relating to an on-screen display which is to be shown for that channel location between midnight and 7pm is transmitted by the broadcaster to the broadcast data receiver. This data can be used to implement a fixed screen display 12, as shown in figure 2, which can indicate the time 14, the channel name 16, details or adverts relating to the channel 18, 20.

Alternatively and preferably the generated display is a repeated video display which can indicate and/or provide trailers for television programmes which are available for viewing on the next evening and/or the like. This data is processed and used to generate a display on screen but in addition, can be stored in a storage means in the form of a hard disk drive 10 provided in the broadcast data receiver. Thus, when sufficient data has been transmitted and stored to allow the generation of the display on screen, the broadcaster can then cease to transmit data for that channel for at least a time period. Thus, in effect, no repeat sets of data are then transmitted and instead, if a user selects to view the particular channel in question, the broadcast data receiver, rather than searching for newly transmitted data refers to the data in the storage means, identifies the portion of data required to allow the onscreen display to be generated and generates the display, and repeats the same thereafter, taking the data from the storage means each time.

Thus, to the user, there is no difference to the conventional approach but to the broadcaster, bandwidth capacity is freed as they no longer need to continually transmit data for the onscreen display. When one considers that bandwidth capacity can be at a premium, this is an important freeing of bandwidth. The broadcaster can then use this bandwidth for other purposes such as to increase the available number of channels for which data can be transmitted during these time periods over and above the current numbers and/or increase the bit rate and hence quality of data for the existing channels.

The present invention thus provides a number of benefits to both the broadcaster and user. The invention can be used to increase the user's perceived channel choice although some of the channels as discussed above aren't being broadcast continually; the impression to the user is that the channel is available. There is a reduction in overall signal bandwidth requirement, in that bandwidth is only required when broadcasting data for the fixed display or the repeated video display and once stored in the storage means, that broadcast can be terminated and the signal bandwidth used for other purposes. Furthermore, many channels can be provided via this mechanism with the number of channels limited only by local storage capacity of the storage means. One possible use of the additional bandwidth which becomes available is for additional advertising or advertising services to be generated by the broadcaster and hence increase their revenue.

In a further embodiment, the broadcast data receiver may itself monitor the user's viewing habits and programme preferences and then decide on this basis, to decide from which channels to accept continued live data and which channels to refer to storage.

## Claims

1. A television system, said television system including a broadcast data receiver (BDR) (4) connected to or integrally formed with a display screen (6), said BDR (4) receiving digital data from a broadcaster at a remote location and decoding and processing said data to provide video, audio and/or auxiliary data relating to a number of channels and/or programmes, said BDR (4) having storage means for the selective processing and storage of said received data and **characterised in that**, transmission of data for one or more channels on which new and changing data is broadcast for a limited period of time in any given time period, is identified by the broadcast data receiver (4) and, in those time periods outside the given time period, an audio and/or video display is generated on the display screen (6) and/or via speakers for said one or more channels from data held in said storage means.

2. A television system according to claim 1 **characterised in that** outside the given time periods a repeat signal is transmitted from the broadcaster at spaced intervals and the BDR (4) generates a display from data held in said storage means between said spaced intervals.

3. A television system according to claim 1 **characterised in that** the storage means is a hard disk drive (10) connected to or integrally formed with the BDR (4).

4. A television system according to claim 1 **characterised in that** the generated display is a fixed or static screen display.

5. A television system according to claim 4 **characterised in that** the data for generating said fixed or static screen display is broadcast to the receiver on a single occasion in the given time period or outside the given time period for storage in said storage means.

6. A television system according to claim 1 **characterised in that** the generated display is a repeated video display.

7. A television system according to claim 6 **characterised in that** the repeated video display is transmitted and stored in the BDR (4) storage means at pre-determined time intervals.

8. A television system according to claim 6 **characterised in that** the repeated video display is transmitted to the BDR (4) on a single occasion in the given time period or outside the given time period for storage in said storage means.

9. A television system according to claim 1 **characterised in that** the BDR is able to monitor the user's viewing habits and/or programme preferences and, based on a pre-defined set of criteria, selects which channels to accept live data therefrom and which channels to generate a display from data stored in said storage means.

10. A broadcast data receiver (BDR), said BDR (4) connected to or integrally formed with a display screen (6), said BDR (4) receiving digital data from a broadcaster at a remote location and decoding and processing said data to provide video, audio and/or auxiliary data relating to a number of channels and/or programmes, said BDR (4) having storage means for the selective processing and storage of said received data and **characterised in that**, transmission of data for one or more channels on which new and changing data is broadcast for a limited period of time in any given time period, is identified by the broadcast data receiver and, in those time periods outside the given time period, a video and/or audio display is generated on the display screen (6) and/or via speakers for said one or more channels from data held in said storage means.

11. A broadcast data receiver according to claim 10 **characterised in that** the generated display is a fixed or static screen display.

12. A broadcast data receiver according to claim 10 **characterised in that** the generated display is a repeated video display

13. A method of generating a display for a television system, said television system including a broadcast data receiver (BDR) (4) connected to or integrally formed with a display screen (6), said BDR (4) receiving digital data from a broadcaster at a remote location and decoding and processing said data to provide video, audio and/or auxiliary data relating to a number of channels and/or programmes, and **characterised in that** said method includes the steps of said BDR (4) identifying data relating to one or more channels on which new and changing data is broadcast for a limited period of time only in any given time period, said BDR (4) identifying time periods outside said given time period, and in those outside time periods, said BDR (4) retrieving data stored in storage means connected to or forming part of said BDR and generating a video and/or audio display on said display screen and/or via speakers for said one or more channels.

14. A method according to claim 13 **characterised in that** the BDR (4) generates a fixed or static screen display from data stored in said storage means.

15. A method according to claim 13 **characterised in that** the BDR (4) generates a repeated video display from data stored in said storage means.

16. A method according to claim 13 **characterised in that** the BDR (4) monitors the user's viewing habits and/or programme preferences and, based on a pre-defined set of criteria, selects which channels to accept live data therefrom and which channels to generate a display from data stored in said storage means.
